# FASCICULE DE BREVET EUROPEEN

(11) **EP 0 556 143 B1**
(45) Date de publication et mention de la délivrance du brevet: **23.07.1997**
(21) Numéro de dépôt: 93440016.9
(22) Date de dépôt: 12.02.1993
(51) Int. Cl.: A01D 34/66, A01D 34/24

(54) **Faucheuse avec un dispositif de verrouillage perfectionné**
Mähmaschine mit einer verbesserten Verriegelungsvorrichtung
Mower with an improved locking device

(30) Priorité: 12.02.1992 FR 9201735
(43) Date de publication de la demande: 18.08.1993
(73) Titulaire: KUHN S.A., F-67700 Saverne (FR)
(72) Inventeur: Wolff, Michel, F-67670 Waltenheim sur Zorn (FR)

(56) Documents cités:
- EP-A- 0 361 573
- DE-A- 4 110 430
- DE-U- 9 112 331
- FR-A- 1 453 923
- FR-A- 2 660 519
- GB-A- 2 157 936
- NL-A- 6 918 351
- NL-A- 7 115 956

## Description

La présente invention concerne une faucheuse comportant :
- un mécanisme de coupe s'étendant, au travail, transversalement à la direction de travail,
- une structure d'attelage destinée à être liée au dispositif de relevage d'un véhicule moteur,
- une poutre-support liée d'une part à la structure d'attelage au moyen d'une première articulation d'axe géométrique dirigé vers l'avant et d'autre part au mécanisme de coupe à l'aide d'une deuxième articulation d'axe géométrique également dirigé vers l'avant,
- un limiteur implanté entre la structure d'attelage et la poutre-support et servant à limiter le pivotement de la poutre-support par rapport à la structure d'attelage autour de l'axe géométrique de la première articulation, ce limiteur étant lié à sa première extrémité à la structure d'attelage au moyen d'une articulation présentant un axe géométrique au moins sensiblement parallèle à l'axe géométrique de la première articulation et, à sa deuxième extrémité, à la poutre-support au moyen d'une liaison coulissante durant le travail et destinée, pour le transport, à être bloquée par rapport à la poutre-support au moyen d'un premier dispositif mécanique de verrouillage, ladite liaison coulissante étant réalisée par un tourillon prévu à la deuxième extrémité du limiteur coulissant dans au moins un trou oblong de la poutre support,
- un organe de manoeuvre destiné à pivoter le mécanisme de coupe dans une position relevée de transport par rapport à la poutre-support autour de l'axe géométrique de la deuxième articulation,
   et
- un deuxième dispositif mécanique de verrouillage servant à verrouiller le mécanisme de coupe dans sa position relevée de transport.

Une telle faucheuse est connue par le prospectus de la société KRONE **"KRONE - Scheibenmäher AM" réf. VDV 20' - 11.91** distribué à l'exposition AGRITECHNICA 1991.

Cette faucheuse connue comporte en effet tout d'abord :
- un mécanisme de coupe s étendant, au travail, transversalement à la direction de travail,
- une structure d'attelage destinée à être liée au dispositif de relevage d'un véhicule moteur,
   et
- une poutre-support liée d'une part à la structure d'attelage au moyen d'une première articulation d'axe géométrique dirigé vers l'avant et d'autre part au mécanisme de coupe à l'aide d'une deuxième articulation d'axe géométrique également dirigé vers l'avant.

Cette faucheuse connue comporte également un limiteur implanté entre la structure d'attelage et la poutre-support et servant à limiter le pivotement de la poutre-support par rapport à la structure d'attelage autour de l'axe géométrique de la première articulation. Ce limiteur est lié, à sa première extrémité, à la structure d'attelage au moyen d'une articulation présentant un axe géométrique au moins sensiblement parallèle à l'axe géométrique de la première articulation et, à sa deuxième extrémité, à la poutre-support au moyen d'une liaison coulissante durant le travail et destinée, pour le transport, à être bloquée par rapport à la poutre-support. Cette liaison coulissante est réalisée par un tourillon prévu à la deuxième extrémité du limiteur et coulissant dans une lumière oblongue réalisée dans deux pattes solidaires de la poutre-support. Le blocage de la liaison coulissante est réalisé au moyen d'une broche. Après mise en place de cette dernière, le tourillon du limiteur ne peut plus coulisser dans la lumière oblongue. Le pivotement de la poutre-support par rapport à la structure d'attelage autour de l'axe géométrique de la première articulation est ainsi condamné.

Cette faucheuse connue comporte encore un vérin hydraulique destiné à pivoter le mécanisme de coupe dans une position relevée de transport par rapport à la poutre-support autour de l'axe géométrique de la deuxième articulation.

La faucheuse connue comporte enfin encore un deuxième dispositif mécanique de verrouillage servant notamment à verrouiller le mécanisme de coupe dans sa position relevée de transport. Ce deuxième dispositif de verrouillage comporte un verrou articulé sur le mécanisme de coupe et une plaque d'accrochage solidaire de la poutre-support. Ledit verrou articulé peut être manoeuvré par l'utilisateur à partir du tracteur au moyen d'une cordelette.

Au travail, le verrou articulé se trouve du côté de la plaque d'accrochage situé en regard du mécanisme de coupe et la broche est retirée. Le mécanisme de coupe peut ainsi pivoter par rapport à la poutre-support autour de l'axe géométrique de la deuxième articulation. La poutre-support, quant à elle, peut pivoter par rapport à la structure d'attelage autour de l'axe géométrique de la première articulation. Le mécanisme de coupe peut ainsi parfaitement s'adapter au relief du terrain.

Pour amener le mécanisme de coupe en position relevée de transport, l'utilisateur tire sur la cordelette afin de soulever le verrou articulé, puis commande le vérin hydraulique pour faire pivoter le mécanisme de coupe vers le haut autour de l'axe géométrique de la deuxième articulation. Le raccourcissement du vérin hydraulique provoque également le pivotement de la poutre-support vers le haut autour de l'axe géométrique de la première articulation jusqu'à ce que le tourillon du limiteur arrive en contact avec l'extrémité de la lumière oblongue de la poutre-support située du côté du mécanisme de coupe. Lorsque le mécanisme de coupe se trouve sensiblement à la verticale, le verrou articulé qui n'est plus sollicité par l'utilisateur au moyen de la cordelette, s'accroche à l'extrémité de la plaque d'accrochage située du côté de la structure d'attelage. Le pivotement du mécanisme de coupe vers le bas autour de l'axe géométrique de la deuxième articulation est ainsi condamné. L'utilisateur introduit ensuite manuellement la broche dans le logement prévu à cet effet pour bloquer la liaison coulissante. Le pivotement de la poutre-support par rapport à la structure d'attelage est ainsi également condamné et la faucheuse est prête pour le transport.

Pour déposer la faucheuse, l'utilisateur tire tout d'abord sur la cordelette afin de désaccoupler le verrou articulé de la plaque d'accrochage, puis commande le vérin hydraulique en vue de pivoter le mécanisme de coupe vers le bas. Après avoir déposé le mécanisme de coupe sur le sol à l'aide du dispositif de relevage du tracteur, l'utilisateur retire la broche, puis soulève à nouveau la machine à l'aide dudit dispositif de relevage du tracteur. Le tourillon du limiteur se place alors en contact avec l'extrémité de la lumière oblongue située du côté de la structure d'attelage. L'utilisateur introduit alors à nouveau la broche dans son logement pour bloquer le tourillon du limiteur dans sa nouvelle position. Après avoir mis en place une béquille, l'utilisateur amène la machine en contact avec le sol en abaissant le dispositif de relevage du tracteur.

Dans cette faucheuse connue, le verrouillage du pivotement du mécanisme de coupe par rapport à la poutre-support et du pivotement de la poutre-support par rapport à la structure d'attelage requièrent deux dispositifs de verrouillage. La mise en place, respectivement la neutralisation du premier dispositif de verrouillage (au niveau de la liaison coulissante) nécessitent du reste de quitter le siège du tracteur.

Outre le renchérissement occasionné par l'utilisation de deux dispositifs de verrouillage, il convient encore de faire observer que la manipulation de ceux-ci nécessite toute une procédure au cours de laquelle il faut notamment descendre plusieurs fois du tracteur.

Le document **DE-U- 91 12 331** montre une faucheuse comportant :
- un mécanisme de coupe s étendant, au travail, transversalement à la direction de travail,
- une structure d'attelage destinée à être liée au dispositif de relevage d'un tracteur,
   et
- une poutre-support liée d'une part à la structure d'attelage au moyen d'une première articulation d'axe géométrique dirigé vers l'avant et d'autre part au mécanisme de coupe à l'aide d'une deuxième articulation d'axe géométrique également dirigé vers l'avant.

Un limiteur implanté entre la structure d'attelage et la poutre-support et servant à limiter le pivotement de la poutre-support par rapport à la structure d'attelage autour de l'axe géométrique de la première articulation est lié à sa première extrémité à la structure d'attelage au moyen d'une articulation présentant un axe géométrique au moins sensiblement parallèle à l'axe géométrique de la première articulation et, à sa deuxième extrémité, à la poutre-support au moyen d'une liaison coulissante.

Dans cette faucheuse connue, ladite liaison coulissante est réalisée par un tourillon solidaire de la poutre-support coulissant dans une lumière oblongue prévue à la deuxième extrémité du limiteur.

La faucheuse connue comporte encore :
- un vérin hydraulique destiné à pivoter le mécanisme de coupe dans une position relevée de transport par rapport à la poutre-support autour de l'axe géométrique de la deuxième articulation,
   et
- un dispositif mécanique de verrouillage servant à verrouiller le mécanisme de coupe dans sa position relevée de transport.

Outre le fait que dans cette faucheuse connue, la lumière oblongue soit implantée sur le limiteur et le tourillon sur la poutre-support, il convient surtout de relever qu'il n'est prévu aucun dispositif mécanique de verrouillage destiné, pour le transport, à bloquer la liaison coulissante.

Le but de la présente invention est de remédier aux inconvénients de la faucheuse constituant l'état de la technique le plus proche.

A cet effet, la faucheuse selon l'invention est caractérisée en ce que le premier dispositif mécanique de verrouillage et le deuxième dispositif mécanique de verrouillage sont constitués par un seul dispositif mécanique de verrouillage destiné, au transport, à agir entre le limiteur et le mécanisme de coupe.

Dans la faucheuse selon l'invention, il y a un seul dispositif mécanique de verrouillage qui sert à la fois à condamner le pivotement du mécanisme de coupe par rapport à la poutre-support et le pivotement de cette dernière par rapport à la structure d'attelage. Il en découle ainsi un abaissement des coûts de la faucheuse. Parallèlement la procédure de mise en place du dispositif unique de verrouillage, respectivement sa neutralisation, sont plus simples ; le confort d'utilisation de la faucheuse selon l'invention s'en trouve ainsi amélioré.

Dans une réalisation particulièrement intéressante, le dispositif de verrouillage pourra comporter d'une part un crochet articulé sur un tourillon dudit limiteur, et d'autre part un organe d'accrochage du mécanisme de coupe auquel sera destiné à s'accrocher ledit crochet articulé pour le transport.

Le tourillon sur lequel sera articulé le crochet pourra d'ailleurs être avantageusement constitué par le tourillon que comporte le limiteur à sa deuxième extrémité.

En outre, ledit crochet pourra être avantageusement maintenu dans sa position verrouillée au moyen d'un ressort, tandis que le déverrouillage s'effectuera depuis le véhicule moteur à l'aide d'une commande à distance. Il pourra en sus être avantageusement prévu que la partie frontale du crochet soit biseautée. Dans ce cas, aussi bien le verrouillage que le déverrouillage pourront être effectués sans que l'utilisateur soit obligé de quitter le poste de conduite du véhicule moteur.

Ledit crochet pourra par ailleurs comporter une pièce de liaison en forme de "U" renversé, dont les extrémités seront articulées audit tourillon. Le ressort, quant à lui, pourra alors être un ressort à lame fixé à la partie supérieure de ladite pièce de liaison de sorte à appuyer sur le limiteur.

Ledit tourillon pourra avantageusement présenter un axe géométrique au moins sensiblement parallèle à l'axe géométrique de la première articulation. En outre, le (les) trou(s) oblong(s) pourra (pourront) être agencé(s) au moins sensiblement dans le voisinage de la partie médiane de ladite poutre-support.

Avantageusement, la poutre-support pourra également comporter un support en deux parties présentant chacune un trou oblong. Dans ce cas, chaque extrémité longitudinale du tourillon sera guidée dans l'un correspondants desdits trous oblongs. En sus, l'axe longitudinal du (de chaque) trou oblong s'étendra au moins sensiblement suivant l'axe longitudinal de la poutre-support.

Dans une réalisation, il pourra être prévu que l'extrémité extérieure du (de chaque) trou oblong située en regard du mécanisme de coupe soit évidée à sa partie supérieure. Lors du transport, le tourillon se logera alors dans ledit évidement. Dans une autre réalisation différente de la précédente, il pourra être prévu que la position de transport de la deuxième extrémité du limiteur puisse être modifiée au moyen d'un dispositif de réglage, de préférence à vis et écrou.

L'organe de manoeuvre, quant à lui, pourra s'étendre entre la partie supérieure de la structure d'attelage et le mécanisme de coupe. Il pourra être avantageusement constitué d'un vérin lié au mécanisme de coupe par l'intermédiaire d'un trou oblong grâce auquel le mécanisme de coupe pourra s'adapter au relief du sol sans être gêné par ledit vérin. Mais, le degré de liberté autorisé par le trou oblong sera supprimé lorsque le mécanisme de coupe sera relevé dans sa position de transport. Dans cette position en effet, le mécanisme de coupe pourra avantageusement être en contact avec la poutre-support au moyen d'une butée qui stoppera le pivotement du mécanisme de coupe vers la structure d'attelage autour de l'axe géométrique de la deuxième articulation. Cette butée pourra être avantageusement solidaire d'un support de la poutre-support contre lequel un organe d'accrochage du mécanisme de coupe sera destiné à venir en contact.

L'invention sera bien comprise grâce à la description suivante de deux exemples de réalisation non limitatifs faite en référence au dessin annexé sur lequel :
- la figure 1 représente, en position de travail, une faucheuse selon l'invention vue de l'arrière dans le sens d'avance au travail et liée à un véhicule moteur ;
- la figure 2 représente une vue de dessus de la faucheuse de la figure 1 ;
- la figure 3 représente la faucheuse des figures 1 et 2 avec le mécanisme de coupe dans sa position relevée de transport ;
- la figure 4 représente, en position de travail, une autre faucheuse selon l'invention vue de l'arrière dans le sens d'avance au travail et liée à un véhicule moteur ;
   et
- la figure 5 représente la faucheuse de la figure 4 avec le mécanisme de coupe dans sa position relevée de transport.

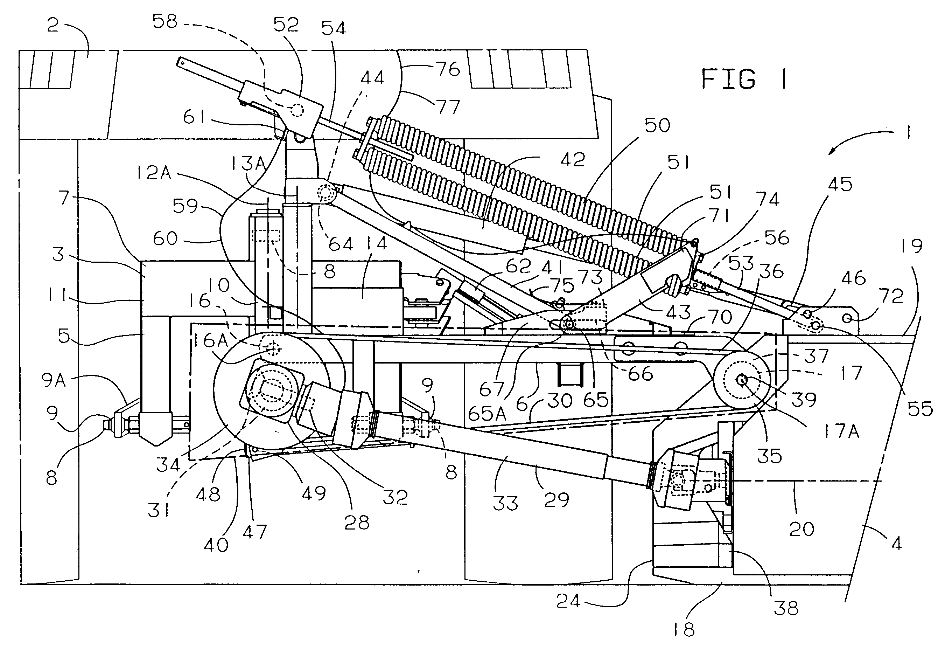

Sur les figures 1 à 3 est représentée une première faucheuse (1) selon l'invention liée à un tracteur agricole (2).

Cette faucheuse (1) se compose principalement d'un châssis (3) comportant une structure d'attelage (5) et une poutre-support (6), et d'un mécanisme de récolte (4).

La structure d'attelage (5) comporte un portique (7) muni, à sa partie frontale, de trois points d'attelage (8) destinés à être liés aux trois points d'attelage (9) du dispositif de relevage (9A) du tracteur agricole (2). Entre le portique (7) et la poutre-support (6) est implanté un bras de positionnement (10) servant à ramener la poutre-support (6) et le mécanisme de récolte (4) vers le plan médian du tracteur (2), afin d'en faciliter le transport. A cet effet, le bras de positionnement (10) de la structure d'attelage (5) est lié d'une part au moins sensiblement au milieu de la poutre supérieure (11) du portique (7) au moyen d'une articulation cylindrique (12) d'axe géométrique (12A) au moins sensiblement vertical, et d'autre part dans le voisinage de l'extrémité longitudinale intérieure de la poutre-support (6) à l'aide d'un tourillon (13) d'axe géométrique (13A) au moins sensiblement vertical. Un organe de positionnement (14), réalisé sous forme d'un vérin hydraulique, est implanté entre le bras de positionnement (10) et l'extrémité du portique (7) en regard du mécanisme de récolte (4). De cette manière, ledit bras de positionnement (10) peut être pivoté autour de l'axe géométrique (12A) de l'articulation cylindrique (12) d'une position de travail (figures 1 à 3) dans laquelle il s'étend au moins sensiblement suivant la direction de travail (15), vers une position de transport (non représentée) dans laquelle ledit bras de positionnement (10) est au moins sensiblement parallèle à la poutre supérieure (11) du portique (7).

La poutre-support (6), quant à elle, s'étend, en vue de dessus lors du travail, transversalement à la direction de travail (15) et juste derrière la structure d'attelage (5). A son extrémité longitudinale intérieure, la poutre-support (6) est articulée à la partie inférieure du tourillon (13) au moyen d'une première liaison pivot (16) d'axe géométrique (16A) dirigé vers l'avant et s'étendant, en vue suivant la direction d'avance (15) au travail, au moins sensiblement dans le voisinage du centre du triangle défini par les trois points d'attelage (8) de la structure d'attelage (5). A son extrémité longitudinale extérieure, la poutre-support (6) du châssis (3) est articulée à l'extrémité longitudinale intérieure (24) du mécanisme de récolte (4) au moyen d'une deuxième liaison pivot (17) d'axe géométrique (17A) dirigé vers l'avant. Cette deuxième liaison pivot (17) est implantée à la partie supérieure du mécanisme de récolte (4) de sorte que, durant le travail, les axes géométriques (16A, 17A) des deux liaisons pivot (16, 17) correspondantes s'étendent au moins sensiblement au même niveau; la poutre-support (6) est ainsi dirigée au moins sensiblement horizontalement. Grâce à ce châssis (3), le mécanisme de récolte (4) peut s'étendre, lors du travail, à côté de la voie du tracteur (2) et s'adapter aisément au relief du sol.

Comme représenté sur les figures 1 à 3, le mécanisme de récolte (4) comporte une barre de coupe (18), une structure porteuse (19) et un rotor de traitement (20) dont on ne voit que l'axe de rotation. La barre de coupe (18) est équipée d'une pluralité d'organes de coupe (21) comportant des disques (22) munis à leur périphérie d'outils de coupe (23). Au travail, ces disques (22) tournent autour d'axes géométriques dirigés vers le haut. De plus, d'une manière connue de l'homme de l'art, les disques (22) qui s'étendent chacun à une extrémité longitudinale de la barre de coupe (18), sont surmontés d'un tambour (non représenté) tournant autour du même axe géométrique que le disque (22) qu'il surmonte. Ces deux tambours calibrent le flux de produit coupé par les organes de coupe (21).

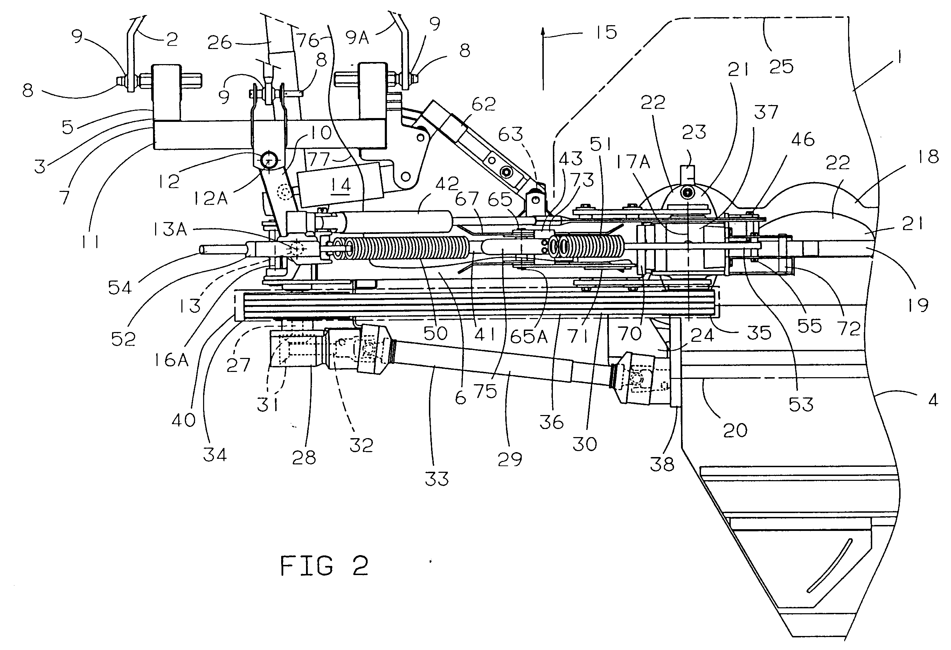

Au-dessus de la barre de coupe (18) s'étend par ailleurs la structure porteuse (19) qui est notamment destinée à supporter les organes de protection (25) (représentés en traits mixtes sur la figure 2). Cette structure porteuse (19) est liée à la barre de coupe (18) au moyen de deux parois latérales (38) s'étendant vers le bas.

Le rotor de traitement (20), connu de l'homme de l'art, s'étend derrière la barre de coupe (18) et au moins sensiblement parallèlement à l'axe longitudinal de la barre de coupe (18). Ce rotor de traitement (20) est guidé en rotation dans le voisinage de ses extrémités longitudinales dans les parois latérales (38) de la structure porteuse (19) et est destiné à conditionner le produit coupé par les organes de coupe (21).

L'entraînement en rotation du rotor de traitement (20) et des disques (22) de la barre de coupe (18) s'effectue à partir de la prise de force (non représentée) du tracteur (2) auquel est attelée la faucheuse (1). En effet, la prise de force entraîne, par l'intermédiaire d'un arbre télescopique à joints universels (26), l'arbre d'entrée (27) d'un carter de renvoi (28). Cet arbre d'entrée (27) transmet le mouvement de rotation d'une part au rotor de traitement (20) au moyen d'organes d'entraînement (29) et d'autre part aux disques (22) de la barre de coupe (18) à l'aide d'organes de transmission (30).

Pour communiquer le mouvement de l'arbre d'entrée (27) du carter de renvoi (28) au rotor de traitement (20), les organes d'entraînement (29) comportent successivement un couple de pignons coniques (31) dont l'un est solidaire dudit arbre d'entrée (27) et l'autre de l'arbre de sortie (32) du carter de renvoi (28), et un arbre télescopique à joints universels (33) s'étendant transversalement à la direction de travail (15). Cet arbre télescopique à joints universels (33) communique le mouvement de rotation de l'arbre de sortie (32) du carter de renvoi (28) au rotor de traitement (20) dont l'extrémité longitudinale traverse, à cet effet, la paroi latérale intérieure (38) de la structure porteuse (19).

La transmission du mouvement de rotation de l'arbre d'entrée (27) du carter de renvoi (28) aux disques (22) de la barre de coupe (18) est réalisée, comme dit précédemment, par des organes de transmission (30). Ceux-ci comportent principalement une paire de poulies (34, 35) sur lesquelles s'enroulent des courroies (36), et un carter de renvoi (37) au moyen duquel la structure porteuse (19) du mécanisme de récolte (4) est liée à la poutre-support (6).

Le carter de renvoi (37) est en effet muni de deux portées cylindriques matérialisant la deuxième liaison pivot (17) et réalisées sous forme de paliers dans lesquels est guidé en rotation un arbre d'entrée (39) dont l'axe de rotation est confondu avec l'axe géométrique (17A) de ladite deuxième liaison pivot (17). C'est au moyen de cet arbre d'entrée (39) que les disques (22) et les tambours de la barre de coupe (18) sont entraînés en rotation.

A l'arrière, l'arbre d'entrée (39) s'étend au-dehors du carter de renvoi (37) et porte l'une (35) des poulies (34, 35) des organes de transmission (30). L'autre poulie (34) est portée par l'arbre d'entrée (27) du carter de renvoi (28) qui est implanté dans le voisinage de la structure d'attelage (5). La transmission du mouvement de cette poulie (34) à la poulie (35) est assurée par les courroies (36) qui s'enroulent sur lesdites poulies (34, 35). Un capot de protection (40) (représenté en traits mixtes) entoure partiellement les poulies (34, 35) et les courroies (36).

Comme le montrent plus particulièrement les figures 1 et 2, le châssis (3) comporte aussi un limiteur (41). Celui-ci sert à limiter le pivotement de la poutre-support (6) autour de l'axe géométrique (16A) de la première liaison pivot (16) et, de ce fait, le déplacement, vers le bas, de la deuxième liaison pivot (17) qui lie le mécanisme de récolte (4) à la poutre-support (6). L'utilisateur peut donc, en vue du transport sur le champ, actionner le dispositif de relevage (9A) du tracteur (2) de sorte à allonger au maximum le limiteur (41) et à soulever le mécanisme de récolte (4).

Pour soulever le mécanisme de récolte (4) dans sa totalité, il est encore prévu un vérin de relevage (42). Ce vérin de relevage (42) est articulé à l'une de ses extrémités longitudinales près de l'extrémité supérieure du tourillon (13) de la structure d'attelage (5) au moyen d'une articulation (44) dont l'axe géométrique s'étend au moins sensiblement parallèlement à l'axe géométrique (16A) de la première liaison pivot (16).

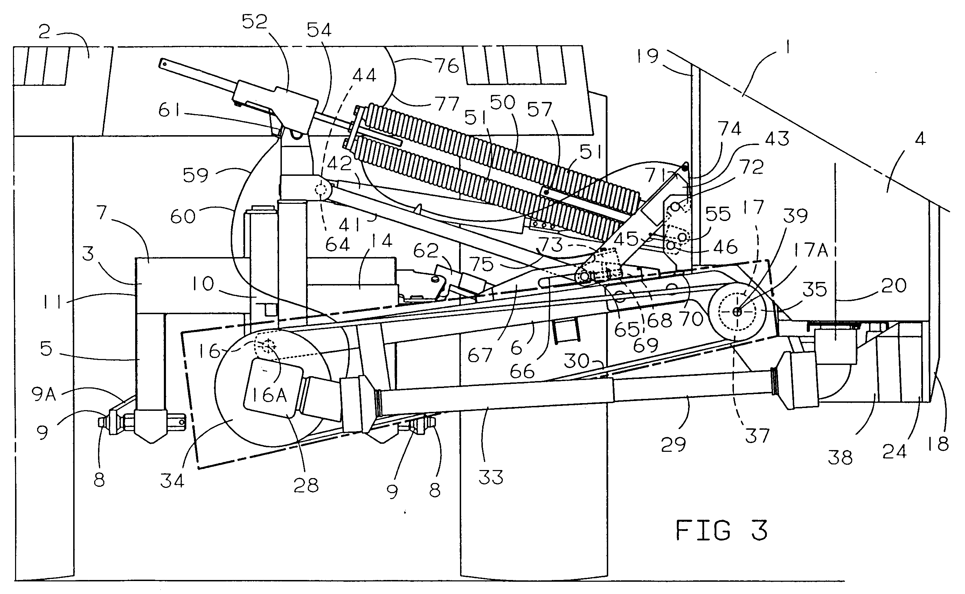

A son autre extrémité longitudinale, le vérin de relevage (42) présente un trou oblong (45) traversé par un axe (46) dirigé au moins sensiblement suivant la direction de travail (15) et fixé à la structure porteuse (19) du mécanisme de récolte (4). Au travail, l'axe (46) s'étend normalement au milieu du trou oblong (45) et ne gêne donc pas le déplacement en hauteur du mécanisme de récolte (4), ni son pivotement autour de l'axe géométrique (17A) de la deuxième liaison pivot (17). De plus, lorsque l'utilisateur désire placer la faucheuse (1) dans sa position andain en actionnant le relevage hydraulique (9A) du tracteur (2), le châssis (3) ainsi que l'extrémité supérieure du vérin de relevage (42) se déplacent vers le haut ce qui amène l'extrémité inférieure du trou oblong (45) contre l'axe (46) du mécanisme de récolte (4). A partir de ce moment, le mécanisme de récolte (4) ne peut plus pivoter autour de l'axe géométrique (17A) de la deuxième liaison pivot (17) et s'éloigne du sol. Une fois dans sa position andain, la faucheuse (1) peut alors être placée dans sa position de transport grâce au vérin de positionnement (14) qui ramène le mécanisme de récolte (4) vers le plan médian du tracteur (2) (ceci n'a pas été montré sur la figure 3) et au vérin de relevage (42) qui permet de pivoter le mécanisme de récolte (4) dans une position verticale de transport (figure 3). Un dispositif de verrouillage (43) qui sera décrit plus en détail ultérieurement, sert à verrouiller le mécanisme de récolte (4) dans sa position relevée de transport.

Lors de la dépose de cette faucheuse (1), le mécanisme de récolte (4) repose longitudinalement sur le sol et la poutre-support (6) est supportée par un organe de dépose (47) (figure 1). Dans cet exemple de réalisation, l'organe de dépose (47) est une béquille (48) liée à la poutre-support (6) dans le voisinage de la première liaison pivot (16) à l'aide d'une articulation cylindrique (49) d'axe géométrique au moins sensiblement parallèle à l'axe géométrique (16A) de ladite première liaison pivot (16). De ce fait, la béquille (48) peut, en vue de la dépose, être pivotée d'une positions escamotée dans une position de dépose dans laquelle la béquille (48) est destinée à supporter la poutre-support (6).

Dans la position de dépose, il est également possible de pivoter la structure d'attelage (5) par rapport à la poutre-support (6) autour de l'axe géométrique (16A) de la première liaison pivot (16). Un tel agencement facilite substantiellement l'attelage de la faucheuse (1) aux trois points d'attelage (9) du tracteur (2).

La faucheuse (1) comporte encore un organe de délestage (50) destiné à délester le mécanisme de récolte (4) au travail. Cet organe de délestage (50) s'étend entre l'extrémité supérieure du tourillon (13) de la structure d'attelage (5) et l'extrémité intérieure de la structure porteuse (19). L'organe de délestage (50) se compose principalement de deux ressorts de traction (51) associés à un dispositif de commande (52). Les deux ressorts de traction (51) sont liés d'une part à la structure porteuse (19) du mécanisme de récolte (4) au moyen d'un premier tirant (53) et d'autre part au dispositif de commande (52) au moyen d'un deuxième tirant (54). Le premier tirant (53) est articulé, à l'une de ses extrémités, à la structure porteuse (19) du mécanisme de récolte (4) au moyen d'un axe (55) dirigé au moins sensiblement parallèlement à l'axe géométrique (17A) de la deuxième liaison pivot (17). A son autre extrémité, le premier tirant (53) est lié au groupe de ressorts (51) à l'aide d'une liaison glissière (56) (figure 1), le coulissement, vers l'extérieur, dudit premier tirant (53) par rapport au groupe de ressorts (51) étant limité par une butée (57) (figure 3) que comporte ledit premier tirant (53). Le dispositif de commande (52), quant à lui, est articulé au tourillon (13) à l'aide d'une articulation cylindrique (58) (figure 1) d'axe géométrique au moins sensiblement parallèle à l'axe géométrique (16A) de la première liaison pivot (16). Dans cette réalisation, cette articulation cylindrique (58) s'étend au-dessus de l'articulation (44) liant le vérin de relevage (42) à ladite structure d'attelage (5).

Le dispositif de commande (52) qui est connu de l'homme de l'art, permet d'annuler l'action des ressorts de traction (51) en vue de la dépose de sorte à autoriser, comme dit précédemment, le pivotement de la structure d'attelage (5) autour de l'axe géométrique (16A) de la première liaison pivot (16). A cet effet, le dispositif de commande (52) comporte une commande à distance (59) qui comporte une gaine (60) à l'intérieur de laquelle peut être translaté un câble (non représenté) lié d'une part à la béquille (48) et d'autre part à une butée escamotable (61) du dispositif de commande (52). De ce fait, dès que la béquille (48) est déplacée de sa position escamotée vers sa position de dépose, elle agit sur le dispositif de commande (52) et annule l'action des ressorts de traction (51) par escamotage de la butée (61).

Cette faucheuse (1) comporte encore un organe de retenue (62) implanté entre la poutre-support (6) et la structure d'attelage (5) et empêchant, dans les conditions normales de travail, le pivotement de la poutre-support (6) autour de l'axe géométrique (13A) du tourillon (13). Vue suivant la direction de travail (15), la liaison (63) (figure 2) de l'organe de retenue (62) à la poutre-support (6) s'étend au moins sensiblement au même niveau que l'axe géométrique (16A) de la première liaison pivot (16) et environ aux deux tiers de la distance séparant l'axe géométrique (16A) de la première liaison pivot (16) de l'axe géométrique (17A) de la deuxième liaison pivot (17). Par ailleurs, ladite liaison (63) est implantée de telle sorte qu'au travail l'organe de retenue (62) ait une forte inclinaison vers le haut et vers l'avant.

L'extrémité intérieure (24) du mécanisme de récolte (4) est délestée à la fois par l'organe de délestage (50) et, de manière dynamique, grâce à l'inclinaison de l'organe de retenue (62). Le délestage de l'extrémité extérieure du mécanisme de récolte (4) est, quant à lui, assuré par l'organe de délestage (50) qui créé un couple autour de l'axe géométrique (17A).

De plus, étant donné que l'organe de retenue (62) n'est soumis à aucun effort lorsque la faucheuse (1) est dans sa position de dépose, l'attelage et la dépose de ladite faucheuse (1) sont simplifiés. En effet, dans la position de dépose, l'organe de retenue (62) autorise le pivotement de la structure d'attelage (5) par rapport à la poutre-support (6) autour de l'axe géométrique (16A) de la première articulation (16).

A cet égard, le limiteur (41) est lié, selon l'invention, d'une part à la structure d'attelage (5) au moyen d'une articulation (64) présentant un axe géométrique au moins sensiblement parallèle à l'axe géométrique (16A) de la première liaison pivot (16), et, d'autre part, à la poutre-support (6) au moyen d'une liaison coulissante. Un tel agencement autorise donc d'une part le pivotement de la structure d'attelage (5) autour de l'axe géométrique (16A) de la première liaison pivot (16) lors de la dépose ou de l'attelage et, d'autre part, le pivotement de la poutre-support (6) lors du travail.

Comme représenté sur la figure 2, le limiteur (41) s'étend, en vue de dessus, au moins sensiblement suivant l'axe longitudinal de la poutre-support (6) et depuis le voisinage de l'articulation (44) liant le vérin de relevage (42) à la structure d'attelage (5) jusque dans le voisinage du milieu de la poutre-support (6). A ce niveau, le limiteur (41) comporte un tourillon (65) présentant un axe géométrique (65A) dirigé au moins sensiblement parallèlement à l'axe géométrique (16A) de la première liaison pivot (16) et dont chaque extrémité longitudinale traverse un trou oblong (66) correspondant que présente la poutre-support (6). Ces deux trous oblongs (66), de dimensions similaires, s'étendent au moins sensiblement suivant l'axe longitudinal de la poutre-support (6) et sont réalisés dans un support (67) fixé sur la face supérieure de ladite poutre-support (6). Ce faisant, lors du pivotement de la poutre-support (6) par rapport à la structure d'attelage (5) autour de l'axe géométrique (16A) de la première liaison pivot (16), le tourillon (65) du limiteur (41) coulisse dans lesdits trous oblongs (66).

Le pivotement maximum de la poutre-support (6) est défini par la longueur des trous oblongs (66) limitant la course du tourillon (65). Toutefois, si l'utilisateur le désire, il est possible de modifier, à l'aide d'un dispositif de réglage (68) (figure 3), la position qu'occupe le tourillon (41) au transport. Ce dispositif de réglage (68) comporte, à cet effet, un dispositif à vis et écrou (69) (s'étendant dans une zone entre le tourillon (65) et la deuxième liaison pivot (17)) dont la vis s'étend au moins sensiblement parallèlement à l'axe longitudinal des trous oblongs (66). Ce faisant, le limiteur (41) (ou son tourillon (65)) bute contre l'extrémité de ladite vis lorsque le mécanisme de récolte (4) est relevé dans sa position de transport au moyen du vérin de relevage (42). En effet, le vérin de relevage (42) fait pivoter le mécanisme de récolte (4) de sa position andain (non représentée) où il s'étend horizontalement au-dessus du sol, vers sa position relevée (figure 3) autour de l'axe géométrique (17A) de la deuxième liaison pivot (17). Le pivotement du mécanisme de récolte (4) est stoppé dès l'instant où la structure porteuse (19) du mécanisme de récolte (4) arrive en contact avec une butée (70) de la poutre-support (6). Ce faisant, le vérin de relevage (42) provoque également le pivotement de la poutre-support (6), vers le haut, autour de l'axe géométrique (16A) de la première liaison pivot (16). Le pivotement de la poutre-support (6) est stoppé dès l'instant où le limiteur (41) (ou son tourillon (65)) arrive en bout de course.

Selon l'invention, l'extrémité coulissante du limiteur (41) peut être bloquée dans cette position par rapport à la poutre-support (6) au moyen du dispositif de verrouillage (43). Etant donné que ce dispositif de verrouillage (43) sert également à verrouiller le mécanisme de récolte (4) dans sa position relevée de transport, le mécanisme de récolte (4) est parfaitement maintenu en position lors du transport.

Par ailleurs, étant donné que le dispositif de verrouillage (43) sert à la fois à verrouiller le mécanisme de récolte (4) dans sa position relevée de transport et à bloquer l'extrémité coulissante dudit limiteur (41), l'utilisation dudit dispositif de verrouillage (43) est particulièrement intéressante. En effet, dans cet exemple de réalisation selon l'invention, le dispositif de verrouillage (43) comporte un crochet (71) qui est articulé sur le tourillon (65) du limiteur (41) et qui est destiné à venir s'accrocher à un organe d'accrochage (72) du mécanisme de récolte (4). Ce crochet (71) comporte en fait une pièce de liaison (73) en forme de "U" renversé dont les extrémités sont articulées sur ledit tourillon (65) afin d'assurer un bon guidage en rotation dudit crochet (71).

Pour permettre un accrochage automatique du crochet (71) à l'organe d'accrochage (72) dès que le mécanisme de récolte (4) arrive dans sa position relevée de transport, la partie frontale (74) du crochet (71) est biseautée et un ressort à lame (75) force le crochet (71) à s'accrocher audit organe d'accrochage (72). A cet effet, le ressort à lame (75) est lié à la partie supérieure de la pièce de liaison (73) du crochet (71) et s'appuie sur l'extrémité inférieure du limiteur. Au transport, le mécanisme de récolte (4) est ainsi verrouillé par rapport à la structure d'attelage (5) via la poutre-support (6).

Il convient de faire observer que le dispositif de réglage (68) positionne avec précision le tourillon (65) du limiteur (41) de sorte que le crochet (71) puisse s'accrocher à l'organe d'accrochage (72) malgré les tolérances de fabrication.

Le déverrouillage du dispositif de verrouillage (43) s'effectue au moyen d'une commande à distance (76) (figures 1 à 3) sur laquelle agit l'utilisateur depuis la cabine du tracteur (2). Avantageusement, la commande à distance (76) comporte une cordelette (77) fixée dans le voisinage de la partie frontale (74) du crochet (71). Ainsi, lorsque l'utilisateur tire sur la cordelette (77), le crochet (71) pivote autour de l'axe géométrique (65A) du tourillon (65) et libère l'organe d'accrochage (72) du mécanisme de récolte (4). Tout en maintenant son action sur la cordelette (77), l'utilisateur commande alors la sortie de la tige du vérin de relevage (42), ce qui a pour effet de faire pivoter le mécanisme de récolte (4), vers le bas, autour de l'axe géométrique (17A) de la deuxième liaison pivot (17). Dès que le crochet (71) n'est plus susceptible de s'accrocher à l'organe d'accrochage (72), l'utilisateur peut cesser de tirer sur la cordelette (77) tout en continuant à laisser descendre le mécanisme de récolte (4) vers sa position andain. L'utilisateur pose ensuite le mécanisme de récolte (4) sur le sol à l'aide du dispositif de relevage (94) du tracteur (2) et le travail peut commencer.

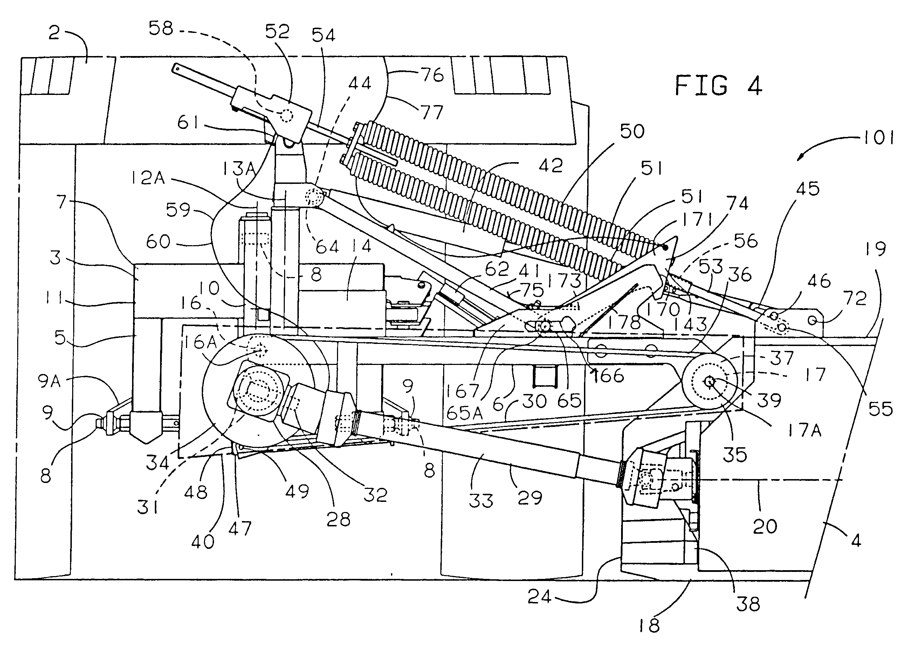

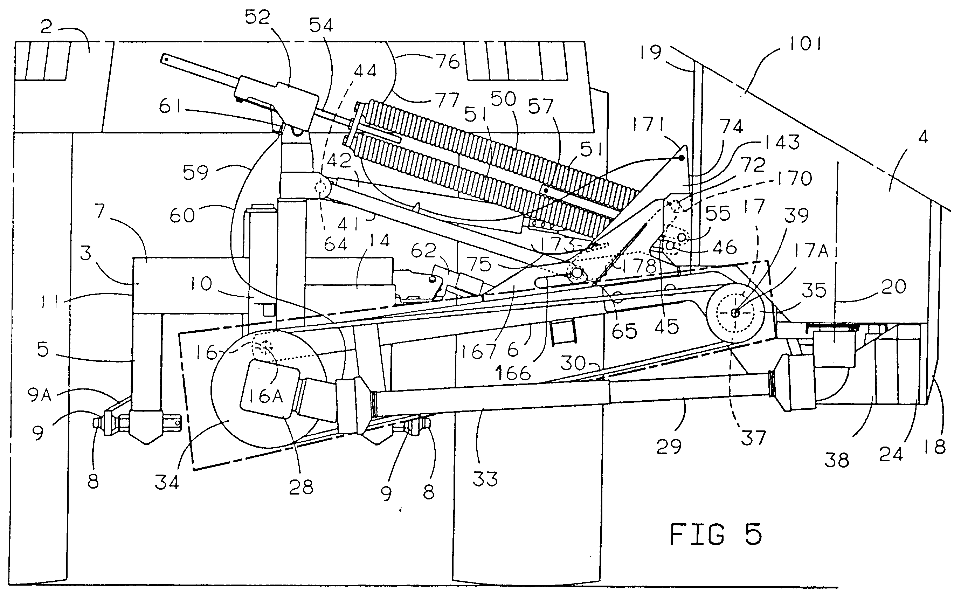

Les figures 4 et 5 montrent un autre exemple de réalisation d'une faucheuse selon l'invention. Cette faucheuse (101) comporte de nombreux moyens identiques à ceux de la faucheuse (1) précédemment décrite. Ces moyens ne seront, de ce fait, pas redécrits. Toutefois, cette faucheuse (101) présente quelques différences remarquables.

Tout d'abord, cette faucheuse (101) comporte une butée (170) qui est solidaire d'une partie du support (167) de la poutre-support (6). Le pivotement du mécanisme de récolte (4), vers sa position relevée de transport, est ici stoppé dès l'instant où l'organe d'accrochage (72) du mécanisme de récolte (4) arrive en contact avec cette butée (170) du support (167). Ce faisant, le crochet (171) du dispositif de verrouillage (143) s'accroche automatiquement audit organe d'accrochage (72).

Etant donné qu'un tel agencement limite considérablement le nombre de pièces définissant la position relative du tourillon (65) par rapport à l'organe d'accrochage (72), les tolérances de fabrication desdites pièces peuvent être moins serrées. L'absence du dispositif de réglage (68) sur cette faucheuse (101) en est une conséquence.

Une autre différence entre cette faucheuse (101) et la faucheuse (1) précédemment décrite apparaît au niveau des trous oblongs (166). A l'extrémité longitudinale extérieure des trous oblongs (166), chaque trou oblong (166) a été évidé à sa partie supérieure. Ainsi, lorsque le mécanisme de récolte (4) a été amené dans sa position relevée de transport au moyen du vérin de relevage (42), l'organe d'accrochage (72) est en contact avec la butée (170) et le crochet (171) du dispositif de verrouillage (143) s'accroche automatiquement audit organe d'accrochage (72). Parallèlement, l'action du vérin de relevage (42) a aussi pour effet de faire pivoter la poutre-support (6) vers le haut et d'amener le tourillon (65) à l'extrémité extérieure des trous oblongs (166). L'utilisateur allonge ensuite le vérin de relevage (42), en laissant par exemple s'écouler une partie de l'huile vers le tracteur (2).

Ce faisant, la poutre-support (6) pivote vers le bas autour de l'axe géométrique (16A) de la première liaison pivot (16) et le tourillon (65) vient se loger dans la partie évidée de chaque trou oblong (166). Dans cette position de transport, il est prévu que le mécanisme de récolte (4) penche quelque peu en direction de la structure d'attelage (5) pour s'appuyer plus particulièrement sur le support (167) afin de ne pas trop solliciter le crochet (171).

Par ailleurs, compte tenu du fait que le crochet (171) s'étend entre les deux parties du support (167), l'effort de traction que peut créer le mécanisme de récolte (4) sur le crochet (171) est avantageusement transmis au support (167) de la poutre-support (6) par l'intermédiaire de chaque extrémité longitudinale du tourillon (65). De plus, l'essentiel du poids du mécanisme de récolte (4) et de la poutre-support (6) est supporté, au transport, par le limiteur (41) et son tourillon (65). La partie évidée de chaque trou oblong (166) favorise ainsi un meilleur contact du tourillon (65) avec le support (167) afin de transmettre en toute sécurité ces efforts importants.

Du reste, étant donné que le crochet (171) qui est lié à l'organe d'accrochage (72), maintient le tourillon (65) à la partie extérieure des trous oblongs (166), ledit tourillon (65) ne risque pas de sortir de la partie évidée lorsque le tracteur (2) roule par-dessus un obstacle que présente le terrain.

Une dernière différence entre la faucheuse (101) et la faucheuse (1) apparaît au niveau de la pièce de liaison (173) qui n'est pas en forme de "U" renversé, mais en forme de "L" renversé. Cependant, le ressort à lame (75) est toujours fixé à la partie horizontale de cette pièce de liaison (173).

Enfin, on peut encore voir sur les figures 4 et 5 que la partie du support (167) qui comporte la butée (170), est rigidifiée au moyen d'un organe rigidifiant (178).

Finalement différentes modifications restent possibles dans le cadre de l'invention décrite, notamment en ce qui concerne la constitution des divers éléments ou par substitution d'équivalents techniques.

## Revendications

1. Faucheuse (1 ; 101) comportant :
- un mécanisme de coupe (4) s'étendant, au travail, transversalement à la direction de travail (15),
- une structure d'attelage (5) destinée à être liée au dispositif de relevage (9A) d'un véhicule moteur (2),
- une poutre-support (6) liée d'une part à la structure d'attelage (5) au moyen d'une première articulation (16) d'axe géométrique (16A) dirigé vers l'avant et d'autre part au mécanisme de coupe (4) à l'aide d'une deuxième articulation (17) d'axe géométrique (17A) également dirigé vers l'avant,
- un limiteur (41) implanté entre la structure d'attelage (5) et la poutre-support (6) et servant à limiter le pivotement de la poutre-support (6) par rapport à la structure d'attelage (5) autour de l'axe géométrique (16A) de la première articulation (16), ce limiteur (41) étant lié à sa première extrémité à la structure d'attelage (5) au moyen d'une articulation (64) présentant un axe géométrique au moins sensiblement parallèle à l'axe géométrique (16A) de la première articulation (16) et, à sa deuxième extrémité, à la poutre-support (6) au moyen d'une liaison coulissante durant le travail et destinée, pour le transport, à être bloquée par rapport à la poutre-support (6) au moyen d'un premier dispositif mécanique de verrouillage, ladite liaison coulissante étant réalisée par un tourillon (65) prévu à la deuxième extrémité du limiteur (41) coulissant dans au moins un trou oblong (66 ; 166) de la poutre support (6),
- un organe de manoeuvre (42) destiné à pivoter le mécanisme de coupe (4) dans une position relevée de transport par rapport à la poutre-support (6) autour de l'axe géométrique (17A) de la deuxième articulation (17),
et
- un deuxième dispositif mécanique de verrouillage servant à verrouiller le mécanisme de coupe (4) dans sa position relevée de transport,
***caractérisée en ce que*** le premier dispositif mécanique de verrouillage et le deuxième dispositif mécanique de verrouillage sont constitués par un seul dispositif mécanique de verrouillage (43 ; 143) destiné, au transport, à agir entre le limiteur (41) et le mécanisme de coupe (4).

2. Faucheuse selon la revendication 1, ***caractérisée en ce que*** le dispositif de verrouillage (43 ; 143) comporte d'une part un crochet (71 ; 171) articulé sur un tourillon (65) dudit limiteur (41), et d'autre part un organe d'accrochage (72) du mécanisme de coupe (4) auquel est destiné à s'accrocher ledit crochet articulé (71 ; 171) pour le transport.

3. Faucheuse selon la revendication 2, ***caractérisée en ce qu*****e** ledit tourillon sur lequel est articulé le crochet (71 ; 171), est constitué par le tourillon (65) que comporte le limiteur (41) à sa deuxième extrémité.

4. Faucheuse selon la revendication 2 ou 3, ***caractérisée en ce que*** le crochet (71 ; 171) est maintenu dans sa position verrouillée au moyen d'un ressort (75) et que le déverrouillage s'effectue depuis le véhicule moteur (2) à l'aide d'une commande à distance (76).

5. Faucheuse selon la revendication 4, ***caractérisée en ce que*** le crochet (71) comporte une pièce de liaison (73) en forme de "U" renversé, dont les extrémités sont articulées audit tourillon (65), et que le ressort (75) est un ressort à lame fixé à la partie supérieure de ladite pièce de liaison (73) de sorte à appuyer sur le limiteur (41).

6. Faucheuse selon la revendication 4 ou 5, ***caractérisée en ce que*** la partie frontale (74) du crochet (71 ; 171) est biseautée.

7. Faucheuse selon l'une au moins des revendications 1 à 6, ***caractérisée en ce que*** ledit tourillon (65) présente un axe géométrique (65A) au moins sensiblement parallèle à l'axe géométrique (16A) de la première articulation (16).

8. Faucheuse selon l'une au moins des revendications 1 à 7, ***caractérisée en ce que*** ledit (lesdits) trou(s) oblong(s) (66 ; 166) est (sont) agencé(s) au moins sensiblement dans le voisinage de la partie médiane de ladite poutre-support (6).

9. Faucheuse selon l'une au moins des revendications 1 à 8, ***caractérisée en ce que*** la poutre-support (6) comporte un support (67 ; 167) en deux parties présentant chacune un trou oblong (66 ; 166), et que chaque extrémité longitudinale du tourillon (65) est guidée dans l'un correspondant desdits trous oblongs (66 ; 166).

10. Faucheuse selon l'une au moins des revendications 1 à 9, ***caractérisée en ce que*** l'axe longitudinal du (de chaque) trou oblong (66 ; 166) s'étend au moins sensiblement suivant l'axe longitudinal de la poutre-support (6).

11. Faucheuse selon l'une au moins des revendications 1 à 10, ***caractérisée en ce que*** l'extrémité extérieure du (de chaque) trou oblong (166) située en regard du mécanisme de coupe (4) est évidée à sa partie supérieure, le tourillon (65) étant logé dans ledit évidement lors du transport.

12. Faucheuse selon l'une au moins des revendications 1 à 11, ***caractérisée en ce que*** la position de transport de la deuxième extrémité du limiteur (41) peut être modifiée au moyen d'un dispositif de réglage (68).

13. Faucheuse selon la revendication 12, ***caractérisée en ce que*** ledit dispositif de réglage (68) comporte un dispositif à vis et écrou (69).

14. Faucheuse selon l'une au moins des revendications 1 à 13, ***caractérisée en ce que*** l'organe de manoeuvre (42) s'étend entre la partie supérieure de la structure d'attelage (5) et le mécanisme de coupe (4).

15. Faucheuse selon la revendication 14, ***caractérisée en ce que*** l'organe de manoeuvre (42) est un vérin lié au mécanisme de coupe (4) par l'intermédiaire d'un trou oblong (45).

16. Faucheuse selon l'une au moins des revendications 1 à 15, ***caractérisée en ce que*** dans sa position relevée de transport, le mécanisme de coupe (4) est en contact avec la poutre-support (6) au moyen d'une butée (70 ; 170).

17. Faucheuse selon la revendication 16, ***caractérisée en ce que*** la butée (170) est solidaire d'un support (167) de la poutre-support (6), et qu'un organe d'accrochage (72) du mécanisme de coupe (4) est destiné à venir en contact avec ladite butée (170).

18. Faucheuse selon l'une au moins des revendications 1 à 17, ***caractérisée en ce*** **qu**'elle comporte en sus des organes de traitement (20) du produit coupé.

## Claims

1. Mower (1; 101) including:
- a cutting mechanism (4) extending, during work, transversely to the direction of work (15),
- a hitching structure (5) intended to be connected to the lift device (9A) of a motor vehicle (2),
- a support beam (6) connected on the one hand to the hitching structure (5) by means of a first articulation (16) of forwards-pointing geometric axis (16A) and on the other hand to the cutting mechanism (4) by means of a second articulation (17), also of forwards-pointing geometric axis (17A),
- a limiter (41) inserted between the hitching structure (5) and the support beam (6) and serving to limit the pivoting of the support beam (6) with respect to the hitching structure (5) about the geometric axis (16A) of the first articulation (16), this limiter (41) being connected at its first end to the hitching structure (5) by means of an articulation (64) which has a geometric axis at least substantially parallel to the geometric axis (16A) of the first articulation (16) and at its second end to the support beam (6) by means of a connection which can slide during work and is intended, for transport, to be immobilized with respect to the support beam (6) by means of a first mechanical locking device, the said sliding connection being produced using a journal (65) provided at the second end of the limiter (41) sliding in at least one oblong hole (66; 166) of the support beam (6),
- an operating member (42) intended to pivot the cutting mechanism (4) into a raised transport position with respect to the support beam (6) about the geometric axis (17A) of the second articulation (17),
and
- a second mechanical locking device which serves to lock the cutting mechanism (4) in its raised transport position,
***characterized in*** that the first mechanical locking device and the second mechanical locking device consist of a single mechanical locking device (43; 143) intended, during transport, to act between the limiter (41) and the cutting mechanism (4).

2. Mower according to Claim 1, ***characterized in*** that the locking device (43; 143) includes on the one hand a hook (71; 171) articulated to a journal (65) of the said limiter (41) and on the other hand a catching member (72) of the cutting mechanism (4) on which the said articulated hook (71; 171) is intended to catch for transport.

3. Mower according to Claim 2*, **characterized in*** that the said journal on which the hook (71; 171) is articulated consists of the journal (65) exhibited by the limiter (41) at its second end.

4. Mower according to Claim 2 or 3, ***characterized in*** that the hook (71; 171) is held in its locked position by means of a spring (75) and in that unlocking takes place from the motor vehicle (2) using a remote control (76).

5. Mower according to Claim 4, ***characterized in*** that the hook (71) includes a connecting piece (73) in the shape of an inverted U, the ends of which are articulated to the said journal (65), and in that the spring (75) is a leaf spring fixed to the upper part of the said connecting piece (73) in such a way that it bears on the limiter (41).

6. Mower according to Claim 4 or 5, ***characterized in*** that the front part (74) of the hook (71; 171) is chamfered.

7. Mower according to at least one of Claims 1 to 6, ***characterized in*** that the said journal (65) has a geometric axis (65A) at least substantially parallel to the geometric axis (16A) of the first articulation (16).

8. Mower according to at least one of Claims 1 to 7, ***characterized in*** that the said oblong hole(s) (66; 166) is (are) arranged at least substantially near to the middle part of the said support beam (6).

9. Mower according to at least one of Claims 1 to 8, ***characterized in*** that the support beam (6) includes a support (67; 167) made in two parts, each having an oblong hole (66; 166) and in that each longitudinal end of the journal (65) is guided in a corresponding one of the said oblong holes (66; 166).

10. Mower according to at least one of Claims 1 to 9, ***characterized in*** that the longitudinal axis of the (of each) oblong hole (66; 166) extends at least substantially along the longitudinal axis of the support beam (6).

11. Mower according to at least one of Claims 1 to 10, ***characterized in*** that the outer end of the (of each) oblong hole (166) facing the cutting mechanism (4) has a recess at its upper part, the journal (65) being housed in the said recess during transport.

12. Mower according to at least one of Claims 1 to 11, ***characterized in*** that the transport position of the second end of the limiter (41) can be altered by means of an adjustment device (68).

13. Mower according to Claim 12, ***characterized in*** that the said adjustment device (68) includes a screw and nut device (69).

14. Mower according to at least one of Claims 1 to 13, ***characterized in*** that the operating member (42) extends between the upper part of the hitching structure (5) and the cutting mechanism (4).

15. Mower according to Claim 14, ***characterized in*** that the operating member (42) is a ram connected to the cutting mechanism (4) via an oblong hole (45).

16. Mower according to at least one of Claims 1 to 15, ***characterized in*** that in the raised transport position, the cutting mechanism (4) is in contact with the support beam (6) by means of a stop (70; 170).

17. Mower according to Claim 16, ***characterized in*** that the stop (170) is secured to a support (167) of the support beam (6), and in that a catching member (72) of the cutting mechanism (4) is intended to come into contact with the said stop (170).

18. Mower according to at least one of Claims 1 to 17, ***characterized in*** that it additionally includes members (20) for treating the cut product.

## Patentansprüche

1. Mähmaschine (1; 101), die
- einen Schneidmechanismus (4), der sich im Betrieb quer zur Arbeitsrichtung (15) erstreckt,
- eine Kupplungsvorrichtung (5) zur Verbindung mit der Hebevorrichtung (9A) eines Motorfahrzeugs (2),
- einen Stützträger (6), der einerseits mittels eines ersten Gelenks (16) mit einer nach vorne gerichteten geometrischen Achse (16A) mit der Kupplungsvorrichtung (5) und andererseits mit Hilfe eines zweiten Gelenks (17) mit einer ebenfalls nach vorne gerichteten geometrischen Achse (17A) mit dem Schneidmechanismus (4) verbunden ist,
- einen Begrenzer (41), der zwischen der Kupplungsvorrichtung (5) und dem Stützträger (6) angebracht ist und zum Begrenzen des Schwenkens des Stützträgers (6) bezüglich der Kupplungsvorrichtung (5) um die geometrische Achse (16A) des ersten Gelenks (16) dient, wobei dieser Begrenzer (41) an seinem ersten Ende mittels eines Gelenks (64), das eine zumindest im wesentlichen parallel zur geometrischen Achse (16A) des ersten Gelenks (16) verlaufende geometrische Achse aufweist, mit der Kupplungsvorrichtung (5) und an seinem zweiten Ende mittels einer im Betrieb gleitenden Verbindung mit dem Stützträger (6) verbunden ist, wobei diese Gleitverbindung beim Transport mittels einer ersten mechanischen Verriegelungsvorrichtung bezuglich des Stützträgers (6) gesperrt werden soll und durch einen am zweiten Ende des Begrenzers (41) vorgesehenen Zapfen (65) gebildet wird, der in mindestens einem Langloch (66; 166) des Stützträgers (6) verschiebbar ist,
- ein Betätigungsglied (42) zum Schwenken des Schneidmechanismus (4) in eine angehobene Transportposition bezüglich des Stützträgers (6) um die geometrische Achse (17A) des zweiten Gelenks (17),
und
- eine zweite mechanische Verriegelungsvorrichtung, die zum Verriegeln des Schneidmechanismus (4) in seiner angehobenen Transportposition dient,
umfaßt,
***dadurch gekennzeichnet,*** daß die erste mechanische Verriegelungsvorrichtung und die zweite mechanische Verriegelungsvorrichtung aus einer einzigen mechanischen Verriegelungsvorrichtung (43; 143) bestehen, die beim Transport zwischen dem Begrenzer (41) und dem Schneidmechanismus (4) wirkt.

2. Mähmaschine nach Anspruch 1, ***dadurch gekennzeichnet,*** daß die Verriegelungsvorrichtung (43; 143) einerseits einen an einem Zapfen (65) des Begrenzers (41) angelenkten Haken (71; 171) und andererseits ein Festhakeelement (72) des Schneidmechanismus (4) aufweist, das den angelenkten Haken (71; 171) für den Transport festhaken soll.

3. Mähmaschine nach Anspruch 2*, **dadurch gekennzeichnet,*** daß der Zapfen, an dem der Haken (71; 171) angelenkt ist, aus dem Zapfen (65) besteht, den der Begrenzer (41) an seinem zweiten Ende aufweist.

4. Mähmaschine nach Anspruch 2 oder 3, ***dadurch gekennzeichnet,*** daß der Haken (71; 171) mittels einer Feder (75) in seiner verriegelten Position gehalten wird und daß die Entriegelung mit Hilfe einer Fernsteuerung (76) von dem Motorfahrzeug (2) aus erfolgt.

5. Mähmaschine nach Anspruch 4, ***dadurch gekennzeichnet,*** daß der Haken (71) ein Verbindungsstuck (73) in Form eines umgedrehten "U" aufweist, dessen Enden an dem Zapfen (65) angelenkt sind, und daß es sich bei der Feder (75) um eine Blattfeder handelt, die derart an dem oberen Teil des Verbindungsstucks (73) befestigt ist, daß sie sich auf den Begrenzer (41) stützt.

6. Mähmaschine nach Anspruch 4 oder 5, ***dadurch gekennzeichnet,*** daß der vordere Teil (74) des Hakens (71; 171) abgeschrägt ist.

7. Mähmaschine nach zumindest einem der Ansprüche 1 bis 6, ***dadurch gekennzeichnet,*** daß der Zapfen (65) eine zumindest im wesentlichen parallel zur geometrischen Achse (16A) des ersten Gelenks (16) verlaufende geometrische Achse (65A) aufweist.

8. Mähmaschine nach zumindest einem der Ansprüche 1 bis 7**, *dadurch gekennzeichnet,*** daß das Langloch bzw. die Langlöcher (66; 166) zumindest im wesentlichen in der Nähe des mittleren Teils des Stützträgers (6) angeordnet ist bzw. sind.

9. Mähmaschine nach zumindest einem der Ansprüche 1 bis 8, ***dadurch gekennzeichnet,*** daß der Stützträger (6) eine zweiteilige Stütze (67; 167) aufweist, wobei in den beiden Teilen jeweils ein Langloch (66; 166) ausgebildet ist, und daß jedes Längsende des Zapfens (65) in einem dazugehörigen der Langlöcher (66; 166) geführt wird.

10. Mähmaschine nach zumindest einem der Ansprüche 1 bis 9, ***dadurch gekennzeichnet,*** daß die Längsachse des (jedes) Langslochs (66; 166) zumindest im wesentlichen gemaß der Langsachse des Stützträgers (6) verläuft.

11. Mähmaschine nach zumindest einem der Ansprüche 1 bis 10, ***dadurch gekennzeichnet,*** daß das sich auf der Seite des Schneidmechanismus (4) befindende äußere Ende des (jedes) Langlochs (166) an seinem oberen Teil ausgespart ist, wobei der Zapfen (65) beim Transport in jener Aussparung untergebracht ist.

12. Mähmaschine nach zumindest einem der Ansprüche 1 bis 11, ***dadurch gekennzeichnet,*** daß die Transportposition des zweiten Endes des Begrenzers (41) mittels einer Einstellvorrichtung (68) modifiziert werden kann.

13. Mähmaschine nach Anspruch 12, ***dadurch gekennzeichnet,*** daß die Einstellvorrichtung (68) eine Schraub- und Muttervorrichtung (69) umfaßt.

14. Mähmaschine nach zumindest einem der Ansprüche 1 bis 13, ***dadurch gekennzeichnet,*** daß sich das Betätigungsglied (42) zwischen dem oberen Teil der Kupplungsvorrichtung (5) und dem Schneidmechanismus (4) erstreckt.

15. Mähmaschine nach Anspruch 14, ***dadurch gekennzeichnet,*** daß es sich bei dem Betätigungsglied (42) um einen über ein Langloch (45) mit dem Schneidmechanismus (4) verbundenen Zylinder handelt.

16. Mähmaschine nach zumindest einem der Ansprüche 1 bis 15, ***dadurch gekennzeichnet,*** daß der Schneidmechanismus (4) in seiner angehobenen Transportposition mittels eines Anschlags (70; 170) mit dem Stützträger (6) in Berührung steht.

17. Mähmaschine nach Anspruch 16, ***dadurch gekennzeichnet,*** daß der Anschlag (170) fest mit einer Stütze (167) des Stützträgers (6) verbunden ist und daß ein Festhakeelement (72) des Schneidmechanismus (4) mit dem Anschlag (170) in Kontakt kommen soll.

18. Mähmaschine nach zumindest einem der Ansprüche 1 bis 17, ***dadurch gekennzeichnet,*** daß sie des weiteren Glieder (20) zur Behandlung des Schnittgutes aufweist.
